Europäisches Patentamt

European Patent Office

Office européen des brevets

(11) Veröffentlichungsnummer: **0 333 917**
**A2**

## (12) EUROPÄISCHE PATENTANMELDUNG

(21) Anmeldenummer: 88115753.1

(22) Anmeldetag: 24.09.88

(51) Int. Cl.⁴: **F16H 55/17 , F16F 15/30**

(30) Priorität: 19.03.88 DE 8803780 U

(43) Veröffentlichungstag der Anmeldung:
27.09.89 Patentblatt 89/39

(84) Benannte Vertragsstaaten:
**DE FR GB IT SE**

(71) Anmelder: **Winkelmann & Pannhoff GmbH**
**Schmalbachstrasse 2**
**D-4730 Ahlen(DE)**

(72) Erfinder: **Winkelmann, Heinrich**
**Auf dem Westkamp 26**
**D-4730 Ahlen(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Schwungrad für Schaltgetriebe.**

(57) Mit einem Schwungrad für Schaltgetriebe mit einteilig aus kaltverformten Blech hergestellter Schwungrad-Scheibe mit Außenverzahnung soll eine Lösung geschaffen, welche das Gesamtgewicht eines Schwungrades der betreffenden Art bei ausreichender Festigkeit sowohl im Scheibenbereich als auch im Bereich der Außenverzahnung entsprechend den jeweils auftretenden Kräften wesentlich herabsetzt.

Dies wird dadurch erreicht, daß die Außenverzahnung (3a;3b) aus einem vor deren Formung gegenüber dem Blechrohling verdickten Randbereich desselben gebildet ist, derart, daß der Querschnitt der Außenverzahnung größer ist, als der Querschnitt einer entsprechend langen Ringzone mit der Blechstärke des Blechrohlings.

Fig 1

## Schwungrad für Schaltgetriebe

Die Erfindung betrifft ein Schwungrad für Schaltgetriebe mit einteilig aus kaltverformtem Blech hergestellter Schwungrad-Scheibe mit Außenverzahnung.

Derartige Schwungräder sind gegenüber zweiteilig hergestellten Schwungrädern, d.h. solchen, bei denen die Schwungradscheibe aus kaltverformtem Blech und die Außenverzahnung in einem gesonderten Ring mittels spanabhebender Verformung gebildet ist, wesentlich kostengünstiger zu fertigen. Allerdings hat es sich herausgestellt, daß zur Erzielung einer ausreichend festen Außenverzahnung von einem Blechrohling mit einer solchen Stärke ausgegangen werden muß, wie diese für den eigentlichen Scheibenbereich mit Anschlußnabe zur Aufnahme der dort wirkenden Kräfte nicht erforderlich ist, d.h. in diesem Bereich liegt eine gewisse Überdimensionierung vor. Gerade im PKW-Motorenbereich ist man aber bestrebt, das Gewicht aller benötigten Teile soweit wie irgend möglich herabzusetzen.

Aufgabe der Erfindung ist daher die Schaffung einer Lösung, welche das Gesamtgewicht eines Schwungrades der betreffenden Art bei ausreichender Festigkeit sowohl im Scheibenbereich als auch im Bereich der Außenverzahnung entsprechend den jeweils auftretenden Kräften wesentlich herabsetzt.

Bei einem Schwungrad der eingangs bezeichneten Art wird diese Aufgabe gemäß der Erfindung dadurch gelöst, daß die Außenverzahnung aus einem vor deren Formung gegenüber dem Blechrohling verdickten Randbereich desselben gebildet ist, derart, daß der Querschnitt der Außenverzahnung größer ist, als der Querschnitt einer entsprechend langen Ringzone mit der Blechstärke des Blechrohlings.

Aufgrund dieser Ausbildung wird erkennbar das Gesamtgewicht des Schwungrades durch entsprechende Reduzierung der Blechstärke im Scheibenbereich bei gleichbleibender Festigkeit der Außenverzahnung und noch ausreichender Festigkeit im Scheiben- und Verbindungsbereich mit einer Antriebswelle deutlich herabgesetzt.

Beispielsweise kann man bei einer Ausgangsblechstärke von 2 mm und einem Eingriffswinkel der Zahnung von 12° die Blechstärke der Zahnflanken im fertig verformten Zahnungsbereich mit 1,1 mm bemessen, wenn man vorher eine entsprechende Verdickung des betreffenden Randbereiches vornimmt.

In ähnlicher Weise kann man bei einer Ausgangsblechstärke von 2 mm und einem Eingriffswinkel der Zahnung von 20° die Blechstärke der Zahnflanken im fertig verformten Zahnungsbereich mit 1,25 mm dimensionieren.

In beiden Fällen ergibt sich gegenüber einem bisher üblichen Schwungrad mit einer Ausgangsblechstärke von 3,0 mm und gleichen Stärken der Zahnflanken eine Gewichtsersparnis von ca. 27 %.

Die Erfindung ist nachstehend anhand der Zeichnung beispielsweise näher erläutert, diese zeigt in

Fig. 1 eine Draufsicht auf eine halbe Schwungrad-Scheibe gemäß der Erfindung, wobei im oberen Quadranten eine Verzahnung mit einem Eingriffswinkel von 12° und im unteren Quadranten mit einem Eingriffswinkel von 20° wiedergegeben ist,

Fig. 2 einen Schnitt durch das Schwungrad gemäß Fig. 1,

Fig. 3 einen vergrößerten Ausschnitt der Verzahnung mit einem Eingriffswinkel von 12° und in

Fig. 4 einen vergrößerten Ausschnitt einer Verzahnung mit 20°-Eingriffswinkel,

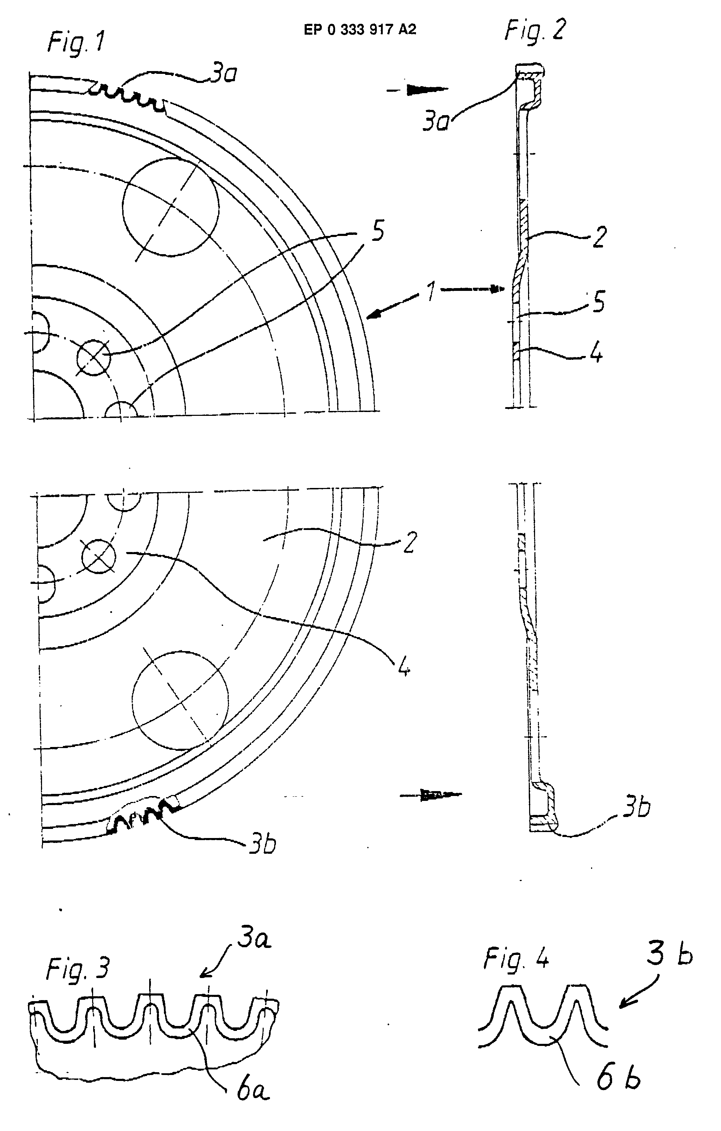

Ein insgesamt mit 1 bezeichnetes Schwungrad weist eine Schwungradscheibe 2 mit einer Außenverzahnung 3a mit einem Eingriffswinkel von 12° im oberen Quadranten gemäß Fig. 1 und mit einer Außenverzahnung 3b im unteren Quadranten gemäß Fig. 1 auf, wobei es sich natürlich versteht, daß eine wirkliche Scheibe jeweils eine Außenverzahnung mit gleichbleibendem Eingriffswinkel besitzt.

Die Schwungrad-Scheibe 2 ist mit einem Nabenteil 4 mit Befestigungsöffnungen 5 ausgebildet.

Das gesamte Schwungrad, d.h. Scheibe 2 mit Außenverzahnung 3a bzw. 3b wird durch Kaltverformung eines einteiligen, im Ausgangszustand kreisförmigen Blechs gebildet, wobei vor der Formung der Außenverzahnung 3a bzw. 3b der betreffende Randbereich mittels geeigneter Blechverformungsverfahren, wie Stauchung oder dgl. verdickt wird.

Das Maß der Verdickung wird derart gewählt, daß beispielsweise bei einer Ausgangsblechstärke von 2 mm und einem Eingriffswinkel von 12° (siehe insbesondere Fig. 3) sich eine Blechstärke im Bereich der Zahnflanken 6a von 1,1 mm ergibt.

Bei dem in Fig. 4 wiedergegebenen Ausführungsbeispiel ergibt sich bei einem Eingriffswinkel von 20° und gleicher Ausgangsblechstärke von 2 mm eine Blechstärke der Zahnflanken 6b von 1,25 mm.

Es hat sich gezeigt, daß die bei derartigen Schwungrädern an der Außenverzahnung auftretenden Kräfte mit derart di mensionierten Außenverzahnungen gut aufnehmbar sind und daß ebenso der Scheibenbereich mit 2 mm Blechstärke völlig ausreichend ist, um die vorkommenden Drehmomente aufzunehmen bzw. vom Nabenanschlußbereich 4-5 auf die anzuschließende Welle zu übertragen.

**Ansprüche**

1. Schwungrad für Schaltgetriebe mit einteilig aus kaltverformtem Blech hergestellter Schwungrad-Scheibe mit Außenverzahnung,
dadurch gekennzeichnet,
daß die Außenverzahnung (3a; 3b) aus einem vor deren Formung gegenüber dem Blechrohling verdickten Randbereich desselben gebildet ist, derart, daß der Querschnitt der Außenverzahnung größer ist, als der Querschnitt einer entsprechend langen Ringzone mit der Blechstärke des Blechrohlings.
Schwungrad nach Anspruch 1,
dadurch gekennzeichnet,
daß bei einer Ausgangsblechstärke von 2 mm und einem Eingriffswinkel der Zahnung von 12° die Blechstärke der Zahnflanken (6a) im fertig verformten Zahnungsbereich (3a) 1,1 mm beträgt.
3. Schwungrad nach Anspruch 1,
dadurch gekennzeichnet,
daß bei einer Ausgangsblechstärke von 2 mm und einem Eingriffswinkel der Zahnung von 20° die Blechstärke der Zahnflanken (6b) im fertig verformten Zahnungsbereich (3b) 1,25 mm beträgt.

Fig. 1

3a

5

1

Fig. 2

3a

2

5

4

2

4

3b

3b

Fig. 3

3a

6a

Fig. 4

3b

6b